# EUROPEAN PATENT SPECIFICATION

(11) **EP 3 527 795 B1**
(45) Date of publication and mention of the grant of the patent: **07.07.2021**
(21) Application number: 17859789.4
(22) Date of filing: 29.08.2017
(51) Int. Cl.: F01N 3/20, F01N 3/24, F02B 43/00, F02M 21/02, F01N 3/10, F01N 3/36

(54) **GAS ENGINE SYSTEM**
GASMOTORSYSTEM
SYSTÈME DE MOTEUR À GAZ

(30) Priority: 13.10.2016 JP 2016201657
(43) Date of publication of application: 21.08.2019
(73) Proprietor: Kawasaki Jukogyo Kabushiki Kaisha, Kobe-shi, Hyogo 650-8670 (JP)
(72) Inventor: NONAKA, Yosuke, Hyogo 650-8670 (JP); HORIE, Takashi, Hyogo 650-8670 (JP); HIGUCHI, Takafumi, Hyogo 650-8670 (JP); KIYOTAKI, Gen, Hyogo 650-8670 (JP); NAKAI, Masato, Hyogo 650-8670 (JP)
(74) Representative: Dehns
(86) International application number: PCT/JP2017/030949
(87) International publication number: WO 2018/070125

(56) References cited:
- WO-A1-2012/123636
- DE-A1-102006 037 649
- DE-A1-102014 226 675
- JP-A- H11 350 942
- JP-A- 2001 113 134
- JP-A- 2002 266 631
- JP-A- 2007 138 768
- JP-A- 2010 190 145
- JP-A- 2014 047 646
- US-A1- 2015 361 843

## Description

### Technical Field

The present invention relates to a gas engine system including a catalyst that is set in an exhaust gas passage extending from a gas engine to a turbocharger.

### Background Art

Conventionally, there have been known gas engine systems that include: a gas engine that combusts fuel gas to drive, for example, a power generator; and a turbocharger that uses exhaust gas discharged from the gas engine as a driving source and feeds compressed air into the gas engine.

There are cases where such a gas engine system adopts a gas engine of a flame propagation type, which ignites an air-fuel mixture supplied into a cylinder combustion chamber by pilot light (e.g., by a spark generated by a spark plug or by self-ignition of pilot oil), the air-fuel mixture being a mixture of fuel gas and compressed air. In such a case, part of the fuel gas is left uncombusted near the wall surface of the combustion chamber, and the uncombusted fuel gas is discharged from the gas engine together with exhaust gas. For example, in a case where natural gas, which contains methane as a main component, is used as the fuel gas, the uncombusted fuel gas in the exhaust gas contains a large amount of methane.

To address such a problem, Japanese Laid-Open Patent Application Publication No. H11-350942 (Patent Literature 1) discloses oxidizing the uncombusted fuel gas in the exhaust gas by using a catalyst. The catalyst is set in an exhaust gas passage that extends from the gas engine to the turbocharger. The temperature of the exhaust gas before it is expanded in the turbocharger is high. Accordingly, in a case where the catalyst is set in the exhaust system that extends from the gas engine to the upstream side of the turbocharger, the uncombusted fuel gas can be oxidized by the catalyst more efficiently than in a case where the catalyst is set downstream of the turbocharger.

Generally speaking, immediately after a cold start of the engine, the temperature of the catalyst is a normal temperature, which is significantly lower than a suitable temperature condition for the catalyst to exert its exhaust gas purifying performance. For this reason, at the start of the engine, even though the catalyst is set in the exhaust system of the engine, the exhaust gas discharged to the atmosphere contains a large amount of uncombusted fuel gas. In this respect, it has been proposed to quickly increase the temperature of the catalyst at the start of the engine, and thereby the exhaust gas purifying performance of the catalyst is exerted more promptly. For example, Japanese Laid-Open Patent Application Publication No. 2001-263127 (Patent Literature 2) discloses a fuel injection controller of an internal combustion engine, and the fuel injection controller is configured to, if the catalyst set in the exhaust system of the engine is in a cold state, perform fuel injection in an expansion stroke of the engine to supply an uncombusted fuel and oxygen to the exhaust passage to cause a reaction between the uncombusted fuel and the oxygen, which is catalyzed by the catalyst, thereby quickly increasing the temperature of the catalyst.

WO 2012/123636 A1 discloses a method of operating a turbocharged internal combustion engine.

DE 10 2014 226675 A1 discloses a method for monitoring a methane oxidation catalytic converter of an internal combustion engine.

US 2015/361843 A1 discloses a method of regenerating an oxidation device of an internal combustion engine.

DE 10 2006 037649 A1 discloses a gas engine.

### Summary of Invention

### Technical Problem

Natural gas, which is widely used as a fuel of a gas engine, contains a hydrocarbon (methane) with a carbon number of 1 as a main component. For reference, gasoline, which is used a fuel of a gasoline engine, contains a mixture of hydrocarbons with carbon numbers in the range of 7 to 10 as a main component. A hydrocarbon with a small carbon number has a greater activation energy value for a catalytic reaction catalyzed by a catalyst than a hydrocarbon with a large carbon number. The reason for this is that a C-C (carbon-carbon) bond of a hydrocarbon with a small carbon number is stronger than a C-C bond of a hydrocarbon with a large carbon number, and it requires greater energy when extracting C (carbon) from a hydrocarbon with a small carbon number than when extracting C (carbon) from a hydrocarbon with a large carbon number. That is, a catalytic reaction of a hydrocarbon with a small carbon number occurs less easily than that of a hydrocarbon with a large carbon number, and a catalytic reaction rate of a hydrocarbon with a small carbon number is lower than that of a hydrocarbon with a large carbon number. Therefore, even if the technique disclosed in Patent Literature 2 is applied to a gas engine to supply fuel gas to the exhaust system of the gas engine immediately after a cold start of the gas engine, it is difficult to activate the catalyst at an early stage.

In view of the above, an object of the present invention is, in a gas engine system including a catalyst set in an exhaust system extending from a gas engine, to activate the catalyst at an earlier stage immediately after a cold start of the gas engine.

### Solution to Problem

Viewed from a first aspect, the present invention provides a gas engine system as claimed in claim 1. The gas engine system comprises: a gas engine; an exhaust pipe connected to the gas engine, the exhaust pipe being a pipe through which exhaust gas discharged from the gas engine flows; a turbocharger connected to the exhaust pipe; a catalyst disposed in a passage extending from the exhaust pipe to the turbocharger, the catalyst oxidizing uncombusted fuel gas in the exhaust gas discharged from the gas engine; a catalyst temperature detector configured to measure a temperature of the catalyst; a catalyst activating device configured to supply an activation promoting agent that promotes activation of the catalyst to a passage extending from the exhaust pipe to the catalyst; and a controller including a first functional block configured to operate the catalyst activating device to supply the activation promoting agent when the temperature of the catalyst measured by the catalyst temperature detector is lower than a predetermined threshold; characterized by: an oxygen concentration detector configured to measure an oxygen concentration in the exhaust gas of the gas engine at a position upstream of the catalyst; and an intake air amount detector configured to measure an intake air amount of the gas engine; wherein the activation promoting agent contains a first activation promoting agent containing a hydrocarbon that has a less activation energy value for a catalytic reaction catalyzed by the catalyst than the fuel gas of the gas engine, and wherein the controller includes a third functional block configured to, when the temperature of the catalyst measured by the catalyst temperature detector is lower than the predetermined temperature, adjust at least one of the intake air amount of the gas engine, an oxygen concentration in the intake air, and a fuel injection amount of the gas engine based on the oxygen concentration measured by the oxygen concentration detector and the intake air amount measured by the intake air amount detector to decrease an excess air ratio of the gas engine from the excess air ratio intended for normal operation.

According to the above gas engine system, when the temperature of the catalyst is lower than a temperature range within which the catalyst is activated to exert its desirable purifying performance (hereinafter, the temperature range is referred to as "the optimal temperature range"), such as immediately after a cold start of the system, the activation promoting agent is supplied to the passage extending from the exhaust pipe to the catalyst. Then, when the catalyst and the activation promoting agent come into contact with each other, a catalytic reaction of the activation promoting agent occurs, and the resulting reaction heat causes increase in the temperature of the catalyst. The catalytic reaction of the activation promoting agent occurs more easily than that of the uncombusted fuel gas in the exhaust gas of the gas engine even when the temperature of the catalyst is lower than the optimal temperature range. Therefore, compared to a case where the activation promoting agent is not supplied, the temperature of the catalyst can be increased to the optimal temperature range more quickly, and the catalyst can be activated at an earlier stage.

The above gas engine system may further include a bypass pipe through which the exhaust gas from the exhaust pipe is fed to an intake side of the gas engine without passing through the catalyst. The turbocharger may be disposed adjacently to the gas engine, and may include an exhaust gas inlet that is open in a direction different from a direction toward the exhaust pipe. The exhaust pipe may be disposed above the gas engine, and may include a first exhaust gas outlet that is open in a direction different from a direction toward the turbocharger. The gas engine may include an intake opening that is open in the direction toward the turbocharger.

According to the above configuration, when the temperature of the catalyst is lower than the optimal temperature range, such as immediately after a cold start of the system, the cold exhaust gas of the gas engine can be partly or entirely flowed to the intake side of the gas engine without passing through the catalyst. As a result, the cold exhaust gas does not come into contact with the catalyst, or the flow rate of the cold exhaust gas coming into contact with the catalyst decreases. This makes it possible to lower the possibility that temperature increase of the catalyst is hindered by the cold exhaust gas. Even though the turbocharger is disposed adjacently to the gas engine, the route of the piping from the exhaust gas outlet of the exhaust pipe to the exhaust gas inlet of the turbocharger can be freely set depending on the directions of the openings of the exhaust gas outlet of the exhaust pipe and the exhaust gas inlet of the turbocharger. That is, the catalyst converter can be disposed in an exhaust gas passage extending from the gas engine to the turbocharger while allowing the turbocharger to be disposed adjacently to the gas engine. Accordingly, in the configuration including the gas engine, the turbocharger, and the catalyst converter, which are thus arranged, the bypass pipe provided in a manner to connect between the exhaust pipe and the intake opening of the gas engine is relatively short. This makes it possible to configure the system to be simple and compact.

In the above gas engine system, the exhaust pipe may further include a second exhaust gas outlet that is open in the direction toward the turbocharger, and an upstream end portion of the bypass pipe may be connected to the second exhaust gas outlet.

According to the above configuration, the piping passage formed by the bypass pipe can be made shorter, and the piping of the bypass pipe can be simplified. This makes it possible to configure the system to be simple and compact.

The above gas engine system may further include: a bypass valve provided in a passage in the bypass pipe. The controller may include a second functional block configured to, when the temperature of the catalyst measured by the catalyst temperature detector is lower than the predetermined threshold, operate the bypass valve to increase a degree of opening of the bypass valve.

According to the above configuration, when the temperature of the catalyst is lower than the optimal temperature range, such as immediately after a cold start of the system, the cold exhaust gas of the gas engine is partly or entirely fed to the intake side of the gas engine through the bypass pipe without passing through the catalyst. As a result, the cold exhaust gas does not come into contact with the catalyst, or the flow rate of the cold exhaust gas coming into contact with the catalyst decreases. This makes is possible to lower the possibility that temperature increase of the catalyst is hindered by the cold exhaust gas. Moreover, since the uncombusted fuel gas concentration in the intake air of the gas engine increases and the excess air ratio decreases, the temperature of the exhaust gas of the gas engine becomes higher than when normal operation of the gas engine is performed. Then, the catalyst comes into contact with the exhaust gas having the higher temperature, and the catalytic reaction of the uncombusted fuel gas in the exhaust gas having the higher temperature occurs. In this manner, temperature increase of the catalyst is facilitated. As a result, the temperature of the catalyst can be increased to the optimal temperature range more quickly, and the catalyst can be activated at an earlier stage.

According to the above configuration, when the temperature of the catalyst is lower than the optimal temperature range, such as immediately after a cold start of the system, the excess air ratio of the gas engine is decreased. Accordingly, the gas engine performs combustion in a more fuel-rich state than when normal operation of the gas engine is performed, and consequently, the temperature of the exhaust gas from the gas engine becomes higher than when normal operation of the gas engine is performed. Then, the catalyst comes into contact with the exhaust gas having the higher temperature, and the catalytic reaction of the uncombusted fuel gas in the exhaust gas having the higher temperature occurs. In this manner, temperature increase of the catalyst is facilitated. As a result, the temperature of the catalyst can be increased to the optimal temperature range more quickly, and the catalyst can be activated at an earlier stage.

The above gas engine system may further include a heater configured to heat the catalyst. According to this configuration, when the temperature of the catalyst is lower than the optimal temperature range, such as immediately after a cold start of the system, the catalyst can be heated by the heater. Therefore, the temperature of the catalyst can be increased to the optimal temperature range more quickly, and the catalyst can be activated at an earlier stage.

In the above gas engine system, the activation promoting agent may contain a second activation promoting agent containing at least one of oil, oxygen, oxygen-rich air, hydrogen, and the fuel gas. According to this configuration, at least one of oil, oxygen, oxygen-rich air, hydrogen, and the fuel gas comes into contact with the catalyst. When the activation promoting agent containing at least one of oil, hydrogen, and the fuel gas comes into contact with the catalyst, a catalytic reaction of the activation promoting agent occurs, and the resulting reaction heat causes increase in the temperature of the catalyst. Also, by bringing the activation promoting agent containing at least one of oxygen and oxygen-rich air into contact with the catalyst, temperatures at which the catalyst is activated can be lowered. This makes it possible to increase the temperature of the catalyst to the optimal temperature range more quickly and activate the catalyst at an earlier stage.

### Advantageous Effects of Invention

According to the present invention, when the temperature of the catalyst is lower than the optimal temperature range, such as immediately after a cold start of the system, the temperature of the catalyst can be increased to the optimal temperature range more quickly, and thereby the catalyst can be activated at an earlier stage.

### Brief Description of Drawings

FIG. 1 shows a schematic configuration of a gas engine system.
FIG. 2A shows a view of the gas engine system of FIG. 1 as seen from a power generator side.
FIG. 2B shows a view of the gas engine system of FIG. 1 as seen from a turbocharger side.
FIG. 3 is a sectional view of part of a gas engine and an exhaust pipe included in the gas engine system of FIG. 1.
FIG. 4 is a longitudinal sectional view of a catalyst converter.
FIG. 5 shows a control configuration of the gas engine system.
FIG. 6 is a flowchart of catalyst warm-up control performed by an engine controller.
FIG. 7 shows a schematic configuration of the gas engine.

### Description of Embodiments

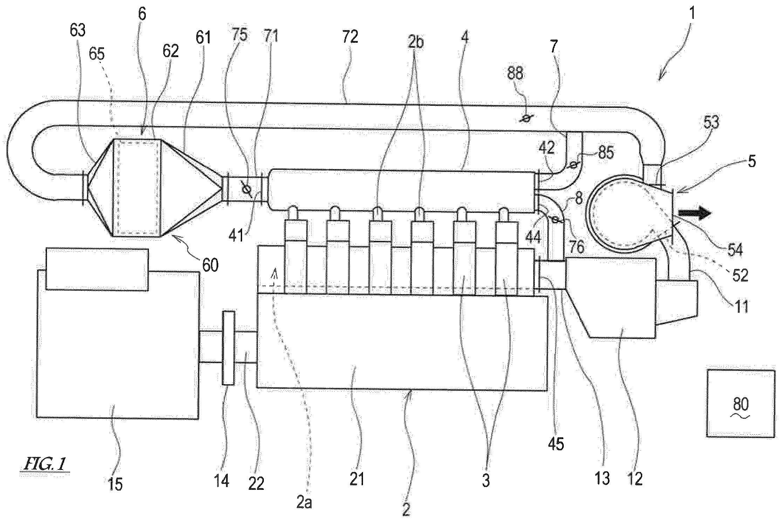

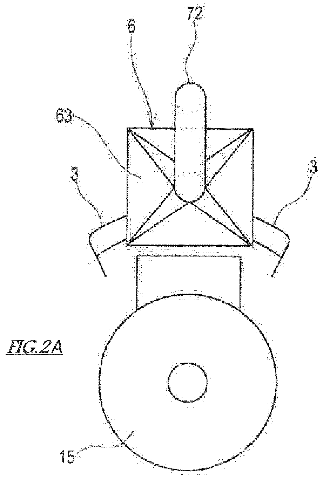

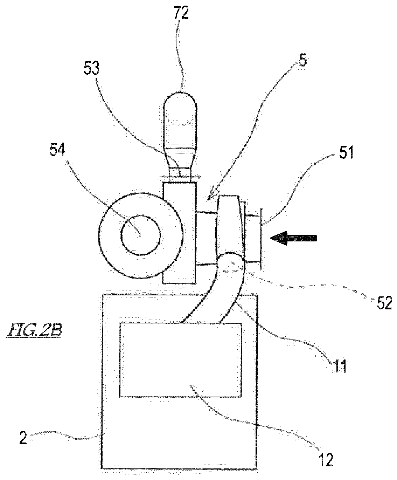

FIG. 1, FIG. 2A, and FIG. 2B show a gas engine system 1 according to an embodiment of the present invention. The embodiment is intended for realizing a suitable layout for a 4-stroke gas engine.

The gas engine system 1 includes: a 4-stroke gas engine 2, which combusts fuel gas; and a power generator 15 driven by the gas engine 2. The gas engine system 1 further includes: a turbocharger 5 disposed adjacently to the gas engine 2; an air cooler 12 provided on a passage between the compressor of the turbocharger 5 and the gas engine 2; a catalyst converter 6 provided on a passage between the gas engine 2 and the turbine of the turbocharger 5; and an engine controller 80. The above expression that the turbocharger 5 is "disposed adjacently" to the gas engine 2 means that at least part of the turbocharger 5 is present within a space that is defined by an expanded contour of the gas engine 2, the expanded contour being obtained by expanding the contour of the gas engine 2 such that the length, width, and height of the gas engine 2 from its center are increased by 1.5 times.

The gas engine 2 includes: a crank shaft 22; and an engine frame 21, which accommodates large part of the crank shaft 22. An end portion of the crank shaft 22, the end portion projecting from the engine frame 21, is coupled to the power generator 15 via a flywheel 14. At a start of the gas engine 2, the flywheel 14 is driven by an unshown starter motor that is an air motor.

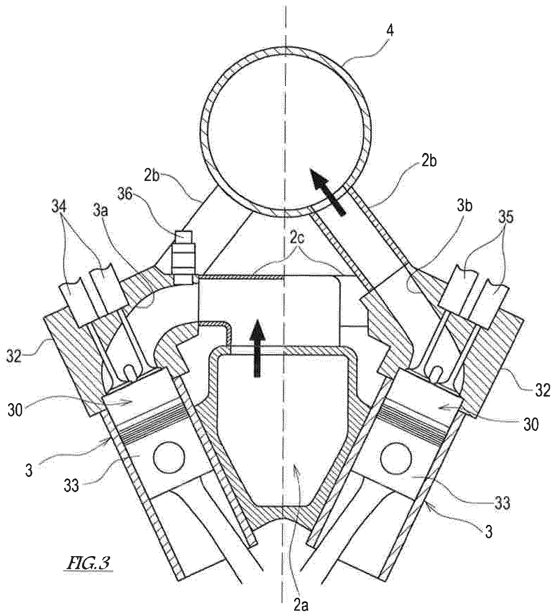

As shown in FIG. 3, a plurality of cylinders 3 are incorporated in the engine frame 21. In the present embodiment, the cylinders 3 are arranged in the axial direction of the crank shaft 22 in two rows. One row of cylinders 3 and the other row of cylinders 3 are inclined relative to the vertical direction at the same angle. When seen in the axial direction of the crank shaft 22, the angle between the cylinders 3 is an acute angle, and the cylinders 3 form a V shape. It should be noted that the one row of cylinders 3 and the other row of cylinders 3 may be inclined relative to the vertical direction at different angles from each other. Moreover, the angle between the cylinders 3 when seen in the axial direction of the crank shaft 22 may be the right angle such that the cylinders 3 form an L shape. Furthermore, the cylinders 3 may be arranged in a single row.

Each cylinder 3 is provided with a combustion chamber 30. Each cylinder 3 forms the combustion chamber 30 together with a piston 33 disposed in the cylinder 3 and a corresponding one of cylinder heads 32. An intake port 3a and an exhaust port 3b are formed in each cylinder head 32. The cylinder head 32 is also provided with intake valves 34 and exhaust valves 35. The intake valves 34 open/close the opening of the intake port 3a to the combustion chamber 30, and the exhaust valves 35 open/close the opening of the exhaust port 3b to the combustion chamber 30. The cylinder head 32 is further provided with a fuel valve 36, which injects the fuel gas into the intake port 3a. The fuel gas is, for example, natural gas containing methane as a main component.

Between the one row of cylinders 3 and the other row of cylinders 3 of the engine frame 21, an intake chamber 2a is formed, which extends in the axial direction of the crank shaft 22. The intake ports 3a of the respective cylinders 3 are each connected to the intake chamber 2a by a corresponding one of first communication pipes 2c. Immediately above the intake chamber 2a, an exhaust pipe 4 extending in the axial direction of the crank shaft 22 is disposed. The exhaust ports 3b of the respective cylinders 3 are each connected to the exhaust pipe 4 by a corresponding one of second communication pipes 2b.

Returning to FIG. 1, the turbocharger 5 is disposed at a position that is away in the axial direction of the crank shaft 22 from one end portion of the exhaust pipe 4, the one end portion being positioned opposite to the other end portion positioned at the power generator 15 side. In other words, the turbocharger 5 is disposed opposite to the power generator 15, with the gas engine 2 being positioned between the turbocharger 5 and the power generator 15. Hereinafter, for the sake of convenience of the description, the axial direction of the crank shaft 22 is referred to as the forward-rearward direction (in particular, the turbocharger 5 side is referred to as the forward side, and the power generator 15 side is referred to as the rearward side), and the horizontal direction orthogonal to the forward-rearward direction is referred to as the right-left direction (in particular, the front side of the direction orthogonal to the plane of FIG. 1 is referred to as the right side, and the back side of the direction is referred to as the left side).

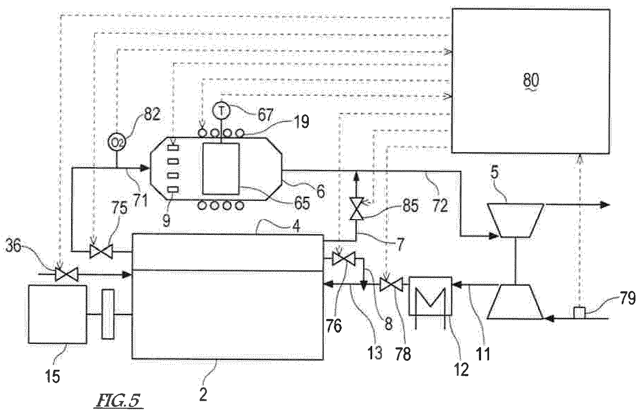

The turbocharger 5 includes: a compressor including an air inlet 51 and an air outlet 52; and a turbine including an exhaust gas inlet 53 and an exhaust gas outlet 54. At a position upstream of the air inlet 51 of the turbocharger 5, an airflow meter 79 configured to measure the air flow rate of the turbocharger 5 is provided (see FIG. 5). In the present embodiment, the air inlet 51 is open to the left, and the air outlet 52 is open diagonally downward. Meanwhile, the exhaust gas inlet 53 is open upward (in a direction different from a direction toward the exhaust pipe 4), and the exhaust gas outlet 54 is open forward.

The air cooler 12 is disposed immediately below the turbocharger 5 and forward of the gas engine 2. The air outlet 52 of the turbocharger 5 is connected to the air cooler 12 by a first intake pipe 11, and the air cooler 12 is connected to an intake opening 45 of the gas engine 2 by a second intake pipe 13. The intake opening 45 is open forward (in a direction toward the turbocharger 5). The first intake pipe 11 extends diagonally downward and then smoothly bends diagonally sideways. The second intake pipe 13 has a straight shape extending in the forward-rearward direction. An intake throttle valve 78 is provided between the air cooler 12 and the intake opening 45 of the gas engine 2 (see FIG. 5). The intake throttle valve 78 is, for example, an electronically controlled valve whose degree of opening can be changed by using a step motor. The amount of air supplied into the intake chamber 2a of the gas engine 2 (i.e., intake air amount) changes in accordance with the degree of opening of the intake throttle valve 78.

The catalyst converter 6 is disposed above the power generator 15. In other words, the catalyst converter 6 is disposed opposite to the turbocharger 5, with the exhaust pipe 4 being positioned between the catalyst converter 6 and the turbocharger 5. The catalyst converter 6 includes an inlet open forward and an outlet open rearward, and the catalyst converter 6 incorporates therein catalysts 65, which oxidize uncombusted fuel gas contained in exhaust gas discharged from the gas engine 2.

The rearward end portion of the exhaust pipe 4 is provided with an exhaust gas outlet 41, which is open rearward (in a direction different from the direction toward the turbocharger 5). The forward end portion of the exhaust pipe 4 is provided with a first bypass port (first exhaust gas outlet) 42 and a second bypass port (second exhaust gas outlet) 44, which are open forward. The exhaust gas outlet 41 of the exhaust pipe 4 is connected to the inlet of the catalyst converter 6 by a first connecting pipe 71, and the outlet of the catalyst converter 6 is connected to the exhaust gas inlet 53 of the turbocharger 5 by a second connecting pipe 72. The first connecting pipe 71, the catalyst converter 6, and the second connecting pipe 72 form a passage extending from the exhaust gas outlet 41 of the exhaust pipe 4 to the exhaust gas inlet 53 of the turbocharger 5. The catalyst converter 6 is disposed in the passage extending from the exhaust gas outlet 41 of the exhaust pipe 4 to the exhaust gas inlet 53 of the turbocharger 5.

The first connecting pipe 71 has a straight shape extending in the forward-rearward direction. On the other hand, the second connecting pipe 72 includes: a straight portion extending in the forward-rearward direction above the catalyst converter 6 and the exhaust pipe 4; a 180-degree bent portion extending from the outlet of the catalyst converter 6 to the upstream end of the straight portion; and a 90-degree bent portion extending from the downstream end of the straight portion to the exhaust gas inlet 53 of the turbocharger 5. Although not illustrated, expandable and contractable members intended for absorbing thermal expansion may be incorporated at suitable positions in the first connecting pipe 71 and the second connecting pipe 72.

The first bypass port 42 of the exhaust pipe 4 is connected to the upstream end portion of an exhaust system bypass pipe 7. The downstream end portion of the exhaust system bypass pipe 7 is connected to the second connecting pipe 72, which connects between the outlet of the catalyst converter 6 and the exhaust gas inlet 53 of the turbocharger 5. By means of the exhaust system bypass pipe 7, the exhaust gas from the exhaust pipe 4 can be fed to the upstream side of the turbocharger 5 without passing through the catalyst converter 6. The second connecting pipe 72 is provided with a check valve 88, which is positioned between the outlet of the catalyst converter 6 and a connection point where the exhaust system bypass pipe 7 is connected to the second connecting pipe 72. The check valve 88 allows a flow of the exhaust gas from the catalyst converter 6 to the turbocharger 5. The check valve 88 is normally open, and is closed at the time of performing maintenance of the catalysts 65 of the catalyst converter 6, which will be described below.

The second bypass port 44 of the exhaust pipe 4 is connected to the upstream end portion of a bypass pipe 8. The downstream end portion of the bypass pipe 8 is connected to the second intake pipe 13, which connects between the air cooler 12 and the intake opening 45 of the gas engine 2. The bypass pipe 8 forms an exhaust gas recirculation (EGR) passage, thorough which the exhaust gas from the exhaust pipe 4 is fed to the intake side of the gas engine 2 without passing thorough the catalyst converter 6. It should be noted that, alternatively, the downstream end portion of the bypass pipe 8 may be connected to the intake side of the turbocharger 5 or to the first intake pipe 11, because the bypass pipe 8 is only required to be capable of feeding the exhaust gas of the gas engine 2 to the intake side of the gas engine 2. Further alternatively, the downstream end portion of the bypass pipe 8 may be connected to the exhaust side of the turbocharger 5. In the above example, the exhaust pipe 4 is provided with the two bypass ports 42 and 44. However, as an alternative, the exhaust pipe 4 may be provided with only one bypass port, and both the exhaust system bypass pipe 7 and the bypass pipe 8 may be connected to the one bypass port via a branch joint.

Normally, the exhaust gas from the exhaust pipe 4 is led to the catalyst converter 6 through the first connecting pipe 71. On the other hand, in a special situation, the exhaust gas is led to the upstream side of the turbocharger 5 through the exhaust system bypass pipe 7 without passing through the catalyst converter 6, and is led to the intake side of the gas engine 2 through the bypass pipe 8 mainly for excess air ratio adjustment. In order to control the flow of the exhaust gas, the first connecting pipe 71 is provided with an exhaust valve 75, which serves as a flow rate adjuster or a passage switcher; the exhaust system bypass pipe 7 is provided with an exhaust bypass valve 85, which serves as a flow rate adjuster or a passage switcher; and the bypass pipe 8 is provided with a bypass valve 76, which serves as a flow rate adjuster. In the present embodiment, butterfly valves are adopted as the respective valves 75, 76, and 85. However, the valves 75, 76, and 85 are not limited to butterfly valves, but may be configured differently.

According to the above-described configuration of the gas engine system 1, even though the turbocharger 5 is disposed adjacently to the gas engine 2, the route of the piping from the exhaust gas outlet 41 of the exhaust pipe 4 to the exhaust gas inlet 53 of the turbocharger 5 can be freely set depending on the directions of the openings of the exhaust gas outlet 41 of the exhaust pipe 4 and the exhaust gas inlet 53 of the turbocharger 5. That is, whatever position the catalyst converter 6 is disposed at, the catalyst converter 6 can be connected to the exhaust gas outlet 41 of the exhaust pipe 4 and the exhaust gas inlet 53 of the turbocharger 5. In other words, the catalyst converter 6 can be disposed in an exhaust gas passage extending from the gas engine 2 to the turbocharger 5 while allowing the turbocharger 5 to be disposed adjacently to the gas engine 2. Accordingly, in the configuration including the gas engine 2, the turbocharger 5, and the catalyst converter 6, which are thus arranged, the bypass pipe 8 provided in a manner to connect between the exhaust pipe 4 and the intake opening 45 of the gas engine 2 is relatively short. This makes it possible to reduce complexity of the gas engine system 1 and suppress increase in the size of the gas engine system 1.

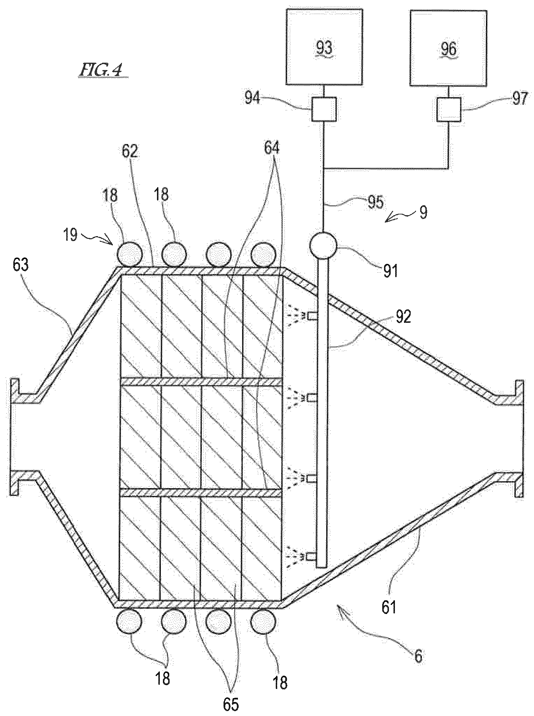

Next, the configuration of the catalyst converter 6 is described in detail with reference to FIG. 4. The catalyst converter 6 includes a casing 60, which accommodates the catalysts 65. The casing 60 includes: a tubular casing body 62, which extends in the forward-rearward direction; an upstream-side hood 61, which expands toward the casing body 62; and a downstream-side hood 63, which narrows from the casing body 62. In the present embodiment, the casing body 62 has a rectangular sectional shape. However, as an alternative, the casing body 62 may have a circular sectional shape, for example. The catalysts 65 are accommodated in the casing body 62. Each of the catalysts 65 is obtained by coating a support base material made of a metal with a coating material that supports a catalytically active component. The support base material may be, for example, a metal honeycomb made of stainless steel, or a metal structure formed by stacking corrugated plates and flat plates alternately. The catalytically active component may be, for example, fine particles of a metal such as platinum or palladium.

The interior of the casing 60 is divided into a plurality of small rooms by a lattice member 64, which supports the catalysts 65. In each small room, a plurality of catalysts 65 are disposed such that they are stacked in the flow direction of the exhaust gas. By removing the casing body 62 from the other part of the casing 60, it becomes possible to readily attach or detach the catalysts 65 to or from the casing body 62. At the time of performing replacement of the catalysts 65, the exhaust valve 75 and the check valve 88 are closed and the exhaust bypass valve 85 is opened, which makes it possible to disassemble the catalyst converter 6 and perform the replacement of the catalysts 65 even while the gas engine system 1 is operating.

The casing 60 of the catalyst converter 6 is provided with a heater 19 configured to heat the catalysts 65. The heater 19 is formed by, for example, a heating wire 18 provided around the casing body 62 of the casing 60. The heater 19 is configured to generate heat when electric current flows through the heating wire 18, and heat the catalysts 65 by the generated heat.

The catalyst converter 6 is provided with a temperature sensor 67 (see FIG. 5). The temperature sensor 67 is a catalyst temperature detector configured to measure the temperature of the catalysts 65. A lambda sensor 82 is provided upstream of the catalysts 65 (see FIG. 5). The lambda sensor 82 is an oxygen concentration detector configured to measure the oxygen concentration in the exhaust gas flowing to the catalysts 65.

The upstream-side hood 61 of the catalyst converter 6 is provided with a catalyst activating device 9 configured to inject an activation promoting agent toward the catalysts 65. The catalyst activating device 9 is formed by, for example, a main pipe 91 and a plurality of branch pipes 92. The main pipe 91 extends in the right-left direction above the upstream-side hood 61. The plurality of branch pipes 92 hang down from the main pipe 91 into the upstream-side hood 61. Each of the branch pipes 92 is provided with nozzles that are directed rearward and arranged at regular pitches. A first activation promoting agent source 93 supplies the activation promoting agent to the main pipe 91 via a supply pipe 95. Although the catalyst activating device 9 according to the present embodiment is configured to inject the activation promoting agent toward the catalysts 65, the catalyst activating device 9 may alternatively be configured to inject the activation promoting agent into a passage extending from the exhaust valve 75 to the catalysts 65. In this alternative configuration, the flow of gas causes the activation promoting agent to pass through the catalysts 65. Therefore, the same effect as that obtained in the case where the activation promoting agent is injected toward the catalysts 65 can be expected.

The activation promoting agent is a hydrocarbon that has a less activation energy value for the catalytic reaction catalyzed by the catalysts 65 than the main component of the fuel gas of the gas engine 2, or is a gas or liquid containing the hydrocarbon as a main component. Generally speaking, the fuel gas of the gas engine 2 is natural gas, and the main component of the natural gas is methane. Methane is a hydrocarbon with a carbon number of 1. The less the carbon number of a hydrocarbon, the less easily the catalytic reaction of the hydrocarbon catalyzed by the catalysts 65 occurs (i.e., the less easily the hydrocarbon is oxidized). In a case where the main component of the fuel gas is methane, the activation promoting agent contains a hydrocarbon that has a less activation energy value for the catalytic reaction catalyzed by the catalysts 65 than methane. Such a hydrocarbon is, for example, an alkane with a carbon number of 2 or greater. Among such alkanes, a gaseous alkane, that is, an alkane with a carbon number of 2 to 4 (i.e., ethane, propane, or butane), is more desirable.

The activation promoting agent may contain at least one of oil, oxygen, oxygen-rich air, hydrogen, and the fuel gas. In the present embodiment, the first activation promoting agent source 93 and a second activation promoting agent source 96 are connected, in parallel, to the main pipe 91 of the catalyst activating device 9 by the supply pipe 95. The aforementioned hydrocarbon is supplied from the first activation promoting agent source 93, and at least one of oil, oxygen, oxygen-rich air, hydrogen, and the fuel gas is supplied from the second activation promoting agent source 96. The catalyst activating device 9 is configured such that the activation promoting agent from the first activation promoting agent source 93 and the activation promoting agent from the second activation promoting agent source 96 are injected together from the nozzles of the branch pipes 92. It should be noted that the amount of activation promoting agent supplied from the first activation promoting agent source 93 is adjusted by a supply amount adjuster 94, such as a valve, provided on the supply pipe 95, and the amount of activation promoting agent supplied from the second activation promoting agent source 96 is adjusted by a supply amount adjuster 97.

As described above, the single catalyst activating device 9 is configured to supply the activation promoting agent containing two or more activation promoting elements to the passage extending from the exhaust pipe 4 to the catalysts 65. By adopting this configuration, the structure of the gas engine system 1 can be simplified. Alternatively, the gas engine system 1 may include a plurality of catalyst activating devices 9, and each catalyst activating device 9 may be configured to supply an activation promoting agent containing a different activation promoting element to the passage extending from the exhaust pipe 4 to the catalysts 65. Further alternatively, the number of activation promoting agent sources included in the catalyst activating device 9 may be more than two.

Next, a control configuration of the gas engine system 1 is described with reference to FIG. 5. The engine controller (ECU: Engine Control Unit) 80 is a processor configured to perform arithmetic processing and control in relation to the operation the gas engine system 1. The engine controller 80 includes a CPU, ROM, RAM, A/D converter, input/output interface, etc., which are not shown. Various instruments, such as the temperature sensor 67, the airflow meter 79, and the lambda sensor 82, are electrically connected to the engine controller 80. Detection signals from these instruments are transmitted to the engine controller 80. Actuators for opening/closing the exhaust valve 75, the bypass valve 76, the exhaust bypass valve 85, the fuel valve 36, and the intake throttle valve 78, the supply amount adjusters 94 and 97 of the catalyst activating device 9, and the heater 19 are electrically connected to the engine controller 80. Control signals from the engine controller 80 are transmitted to these devices. Based on detection signals from the various instruments, the engine controller 80 performs various controls in relation to the operation of the gas engine 2. Hereinafter, catalyst warm-up control that the engine controller 80 performs at a start of the system is described in detail.

As a result of the CPU of the engine controller 80 performing a predetermined program stored in the ROM, the catalyst warm-up control is performed, which will be described below. The engine controller 80 includes at least the following functional blocks: a functional block configured to control operations of the catalyst activating device 9; a functional block configured to control operations of the heater 19; and a functional block configured to control the excess air ratio of the gas engine 2. Each of the functional blocks may be configured as a control circuit or a memory storing a program executed by the engine controller 80. In the catalyst warm-up control, each functional block is controlled to exert its function so as to efficiently warm up the catalysts at an early stage.

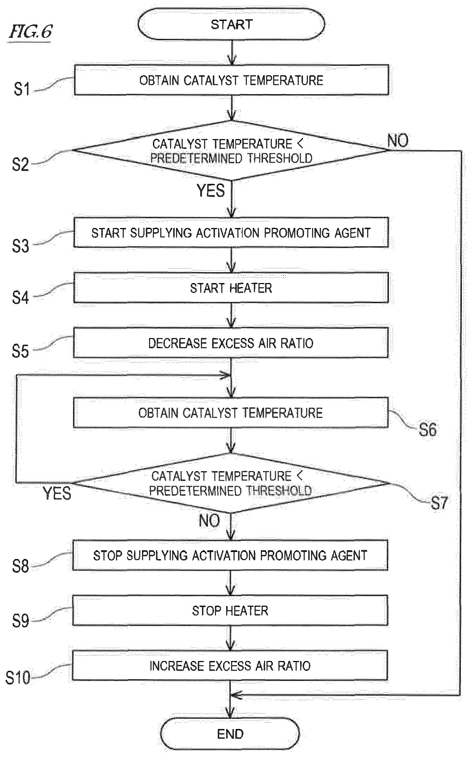

FIG. 6 is a flowchart of the catalyst warm-up control performed by the engine controller 80. As shown in FIG. 6, at a start of the gas engine system 1, first, the engine controller 80 obtains the temperature of the catalysts detected by the temperature sensor 67 (step S1). The engine controller 80 compares the detected catalyst temperature with a predetermined threshold (step S2). It should be noted that the predetermined threshold is the lower limit value of a temperature range (optimal temperature range) within which the catalysts 65 are activated to exert their desirable purifying performance, or is a value greater than the lower limit value. The optimal temperature range of the catalysts 65 varies depending on the kind of, or the catalytic reaction catalyzed by, the catalysts 65.

If the detected catalyst temperature is lower than the predetermined threshold (YES in step S2), the engine controller 80 operates the catalyst activating device 9 to start supplying the activation promoting agent (step S3). As a result, the activation promoting agent is injected toward the catalysts 65 from the nozzles provided on the branch pipes 92 of the catalyst activating device 9. Then, the activation promoting agent supplied into the passage extending from the exhaust pipe 4 to the catalysts 65 comes into contact with the catalysts 65, and thereby activation of the catalysts 65 is promoted.

When the catalysts 65 and the hydrocarbon contained in the activation promoting agent come into contact with each other, a catalytic reaction (exothermic reaction) of the hydrocarbon contained in the activation promoting agent occurs, and the resulting reaction heat causes increase in the temperature of the catalysts 65. The catalytic reaction of the hydrocarbon contained in the activation promoting agent occurs more easily than that of the uncombusted fuel gas contained in the exhaust gas of the gas engine 2 even when the temperature of the catalysts 65 is lower than the optimal temperature range. Therefore, compared to a case where the activation promoting agent is not supplied, the temperature of the catalysts can be increased to the optimal temperature range more quickly, and the catalysts can be activated at an earlier stage.

The activation promoting agent may contain at least one of mist-like oil, oxygen, oxygen-rich air, hydrogen, and the fuel gas in addition to or instead of the hydrocarbon. As one example, in a case where the activation promoting agent contains at least one element from among mist-like oil, the fuel gas, and hydrogen, the element comes into contact with the catalysts 65, and a catalytic reaction of the element occurs. The resulting reaction heat causes the temperature of the catalysts 65 to increase quickly. As another example, in a case where the activation promoting agent contains oxygen or oxygen-rich air, temperatures at which the catalysts 65 are activated are lower than the predetermined threshold. Consequently, even when the temperature of the catalysts 65 is lower than the predetermined threshold, a catalytic reaction of a greater amount of uncombusted fuel gas in the exhaust gas occurs, and the resulting reaction heat causes the temperature of the catalysts 65 to increase quickly.

Next, the engine controller 80 starts the heater 19 (step S4). Electric current is flowed through the heating wire 18 of the heater 19, and thereby the heating wire 18 is heated to a high temperature. The catalysts 65 are heated by heat transferred from the high-temperature heating wire 18. Consequently, the temperature of the catalysts 65 increases more quickly than in a case where the catalysts 65 are not heated by the heating by the heater 19.

Subsequently, the engine controller 80 decreases the excess air ratio λ to a predetermined value (step S5). It should be noted that at the time of performing normal operation of the gas engine 2, the target value of the excess air ratio λ is about 2, whereas at the time of performing the catalyst warm-up control, the target value of the excess air ratio λ is the predetermined value, which falls within the range of 1.0 to 1.8. When the excess air ratio λ is thus decreased, the gas engine 2 performs combustion in a more fuel-rich state than when normal operation of the gas engine 2 is performed, and consequently, the temperature of the exhaust gas from the gas engine 2 becomes higher than when normal operation of the gas engine 2 is performed. Then, the catalysts 65 come into contact with the exhaust gas having the higher temperature, and the catalytic reaction of the uncombusted fuel gas in the exhaust gas having the higher temperature occurs. In this manner, temperature increase of the catalysts 65 is facilitated.

The excess air ratio λ is controlled, such that it is brought closer to the target value, by adjusting the degree of opening of each of the fuel valve 36, the bypass valve 76, and the intake throttle valve 78 based on, at least, the oxygen concentration in the exhaust gas measured by the lambda sensor 82 and the intake air amount measured by the airflow meter 79. In order to decrease the excess air ratio λ, the engine controller 80 performs at least one of decreasing the degree of opening of the intake throttle valve 78 and increasing the degree of opening of the bypass valve 76 by operating the actuator(s) for opening/closing the intake throttle valve 78 and/or the bypass valve 76. When the degree of opening of the intake throttle valve 78 is decreased, the intake air amount of the gas engine 2 decreases. When the degree of opening of the bypass valve 76 is increased, part of the exhaust gas of the gas engine 2 is fed to the intake side of the gas engine 2 without passing through the catalyst converter 6 and the turbocharger 5, and thereby the charge air pressure of the turbocharger 5 decreases, and in addition, the concentration of the uncombusted fuel gas in the intake air of the gas engine 2 increases.

Further, as a result of the increase in the degree of opening of the bypass valve 76, cold exhaust gas of the gas engine 2 immediately after its cold start does not come into contact with the catalysts 65, or the flow rate of the cold exhaust gas coming into contact with the catalysts 65 decreases. Thus, temperature increase of the catalysts is not hindered by the cold exhaust gas.

The engine controller 80 continuously obtains the catalyst temperature detected by the temperature sensor 67 (step S6). As described above, the temperature of the catalysts 65 increases and eventually becomes the predetermined threshold or higher, i.e., falls within the optimal temperature range. When the detected catalyst temperature becomes the predetermined threshold or higher (NO in step S7), the engine controller 80 operates the catalyst activating device 9 to stop supplying the activation promoting agent (step S8), stops the heater 19 (step S9), and increases the excess air ratio λ to the target value intended for normal operation (step S10). It should be noted that in the above-described steps S3 to S5, the order of performing the steps may be changed and more than one of the steps may be performed at the same time, and also, in the above-described steps S8 to S10, the order of performing the steps may be changed and more than one of the steps may be performed at the same time.

As described above, in the gas engine system 1 according to the present embodiment, when the temperature of the catalysts 65 is lower than the optimal temperature range, such as immediately after a cold start of the gas engine 2, a treatment for facilitating temperature increase of the catalysts 65 is performed. Therefore, the temperature of the catalysts 65 increases to the optimal temperature range more quickly and the catalysts 65 are activated at an earlier stage than in a case where the treatment is not performed, and thereby the purifying performance of the catalysts can be exerted more promptly.

Although the preferred embodiment of the present invention is as described above, the above-described configuration can be modified, for example, as described below.

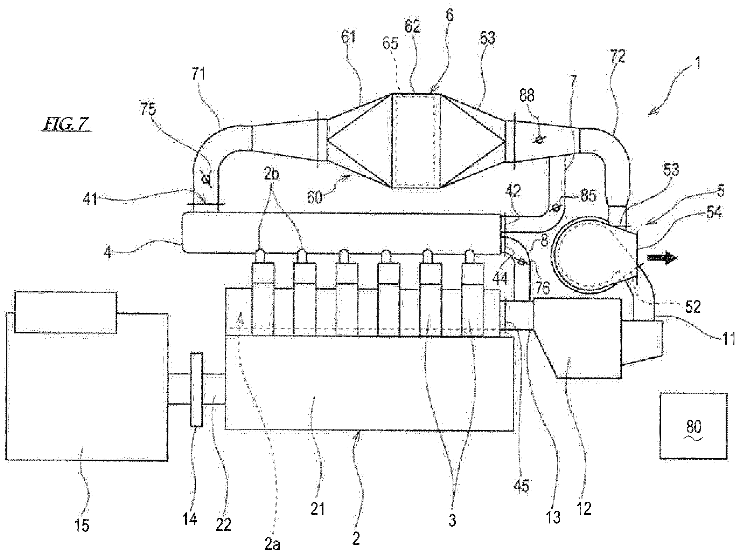

For example, in the above-described embodiment, the catalyst converter 6 is disposed opposite to the turbocharger 5, with the exhaust pipe 4 being positioned between the catalyst converter 6 and the turbocharger 5. By disposing the catalyst converter 6 in this manner, the catalyst converter 6 and the exhaust gas outlet 41 of the exhaust pipe 4 can be connected to each other by the shortest possible distance. However, as shown in FIG. 7, the catalyst converter 6 may be disposed above the exhaust pipe 4. In this case, the exhaust gas outlet 41 of the exhaust pipe 4 is open upward, and the exhaust gas outlet 41 and the upstream-side hood 61 of the catalyst converter 6 are connected to each other by a 90-degree bent pipe. In this manner, the catalyst converter 6 can be disposed by utilizing relatively useless space above the exhaust pipe 4.

### Industrial Applicability

The gas engine system according to the present invention is useful for suppressing the discharge of the uncombusted fuel gas to the atmosphere since the gas engine system is capable of activating the catalyst set in the exhaust system of the gas engine at an earlier stage.

### Reference Signs List

- 1: gas engine system
- 2: gas engine
- 22: crank shaft
- 3: cylinder
- 4: exhaust pipe
- 41: exhaust gas outlet (first exhaust gas outlet)
- 42: bypass port
- 44: bypass port (second exhaust gas outlet)
- 5: turbocharger
- 53: exhaust gas inlet
- 54: exhaust gas outlet
- 6: catalyst converter
- 60: casing
- 61: upstream-side hood
- 62: casing body
- 63: downstream-side hood
- 65: catalyst
- 67: temperature sensor (catalyst temperature detector)
- 71, 72: connecting pipe
- 75, 76: valve
- 7, 8: bypass pipe
- 9: catalyst activating device
- 80: engine controller

## Claims

1. A gas engine system (1) comprising:
a gas engine (2);
an exhaust pipe (4) connected to the gas engine (2), the exhaust pipe (4) being a pipe through which exhaust gas discharged from the gas engine flows;
a turbocharger (5) connected to the exhaust pipe (4);
a catalyst (65) disposed in a passage extending from the exhaust pipe (4) to the turbocharger (5), the catalyst (65) oxidizing uncombusted fuel gas in the exhaust gas discharged from the gas engine (2);
a catalyst temperature detector (67) configured to measure a temperature of the catalyst (65);
a catalyst activating device (9) configured to supply an activation promoting agent that promotes activation of the catalyst (65) to a passage extending from the exhaust pipe (4) to the catalyst (65); and
a controller (80) including a first functional block configured to operate the catalyst activating device (9) to supply the activation promoting agent when the temperature of the catalyst (65) measured by the catalyst temperature detector (67) is lower than a predetermined threshold,
**characterized by**:
an oxygen concentration detector (82) configured to measure an oxygen concentration in the exhaust gas of the gas engine (2) at a position upstream of the catalyst (65); and
an intake air amount detector configured to measure an intake air amount of the gas engine (2),
wherein the activation promoting agent includes a first activation promoting agent, the first activation promoting agent containing a hydrocarbon that has a less activation energy value for a catalytic reaction catalyzed by the catalyst (65) than the fuel gas of the gas engine (2), and
wherein the controller (80) includes a third functional block configured to, when the temperature of the catalyst (65) measured by the catalyst temperature detector (67) is lower than the predetermined threshold, adjust at least one of the intake air amount of the gas engine (2), an oxygen concentration in the intake air, and a fuel injection amount of the gas engine (2) based on the oxygen concentration measured by the oxygen concentration detector and the intake air amount measured by the intake air amount detector to decrease an excess air ratio of the gas engine (2) from the excess air ratio intended for normal operation.

2. The gas engine system (1) according to claim 1, further comprising a bypass pipe (8) through which the exhaust gas from the exhaust pipe (4) is fed to an intake side of the gas engine (2) without passing through the catalyst (65), wherein
the turbocharger (5) is disposed adjacently to the gas engine (2), and includes an exhaust gas inlet (53) that is open in a direction different from a direction toward the exhaust pipe (4),
the exhaust pipe (4) is disposed above the gas engine (2), and includes a first exhaust gas outlet (41) that is open in a direction different from a direction toward the turbocharger (5) and includes a second exhaust gas outlet (44) that is open in the direction toward the turbocharger (5), wherein an upstream end portion of the bypass pipe (8) is connected to the second exhaust gas outlet (44), and
the gas engine (2) includes an intake opening that is open in the direction toward the turbocharger (5).

3. The gas engine system (1) according to claim 2, further comprising:
a bypass valve provided in a passage in the bypass pipe (8), wherein
the controller (80) includes a second functional block configured to, when the temperature of the catalyst (65) measured by the catalyst temperature detector (67) is lower than the predetermined threshold, operate the bypass valve to increase a degree of opening of the bypass valve.

4. The gas engine system (1) according to any one of claims 1 to 3, further comprising a heater configured to heat the catalyst (65).

5. The gas engine system (1) according to any one of claims 1 to 4, wherein
the activation promoting agent includes a second activation promoting agent, the second activation promoting agent containing at least one of oil, oxygen, oxygen-rich air, hydrogen, and the fuel gas.

## Patentansprüche

1. Gasmotorsystem (1), umfassend:
einen Gasmotor (2);
ein Abgasrohr (4), das mit dem Gasmotor (2) verbunden ist, wobei das Abgasrohr (4) ein Rohr ist, durch das Abgas strömt, das von dem Gasmotor ausgestoßen wird;
einen Turbolader (5), der mit dem Abgasrohr (4) verbunden ist;
einen Katalysator (65), der in einem Durchlass angeordnet ist, der sich von dem Abgasrohr (4) zu dem Turbolader (5) erstreckt, wobei der Katalysator (65) unverbranntes Brenngas in dem Abgasrohr oxidiert, das von dem Gasmotor (2) ausgestoßen wird;
einen Katalysatortemperaturdetektor (67), der dazu ausgebildet ist, eine Temperatur des Katalysators (65) zu messen;
eine Katalysatoraktivierungsvorrichtung (9), die dazu ausgebildet ist, ein aktivierungsförderndes Mittel, das Aktivierung des Katalysators (65) fördert, in einen Durchlass einzuspeisen, der sich von dem Abgasrohr (4) zu dem Katalysator (65) erstreckt; und
eine Steuerung (80), die einen ersten Funktionsblock beinhaltet, der dazu ausgebildet ist, die Katalysatoraktivierungsvorrichtung (9) zu betreiben, das aktivierungsfördernde Mittel einzuspeisen, wenn die Temperatur des Katalysators (65), die von dem Katalysatortemperaturdetektor (67) gemessen wird, niedriger als eine vorgegebene Schwelle ist,
**gekennzeichnet durch**:
einen Sauerstoffkonzentrationsdetektor (82), der dazu ausgebildet ist, eine Sauerstoffkonzentration in dem Abgas des Gasmotors (2) an einer Position stromaufwärts des Katalysators (65) zu messen; und
einen Ansaugluftmengendetektor, der dazu ausgebildet ist, eine Ansaugluftmenge des Gasmotors (2) zu messen,
wobei das aktivierungsfördernde Mittel ein erstes aktivierungsförderndes Mittel beinhaltet, das erste aktivierungsfördernde Mittel einen Kohlenwasserstoff enthält, der einen niedrigeren Aktivierungsenergiewert für eine katalytische Reaktion, die von dem Katalysator (65) katalysiert wird, als das Brenngas des Gasmotors (2) aufweist, und
wobei die Steuerung (80) einen dritten Funktionsblock beinhaltet, der dazu ausgebildet ist, wenn die Temperatur des Katalysators (65), die von dem Katalysatortemperaturdetektor (67) gemessen wird, niedriger als die vorgegebene Schwelle ist, mindestens eine der Ansaugluftmenge des Gasmotors (2), einer Sauerstoffkonzentration in der Ansaugluft und einer Brennstoffeinspritzmenge des Gasmotors (2), basierend auf der Sauerstoffkonzentration, die von dem Sauerstoffkonzentrationsdetektor gemessen wird, und der Ansaugluftmenge, die von dem Ansaugluftmengendetektor gemessen wird, anzupassen, um ein Überschussluftverhältnis des Gasmotors (2) von dem Überschussluftverhältnis, das für normalen Betrieb angedacht ist, zu verringern.

2. Gasmotorsystem (1) nach Anspruch 1, weiter umfassend ein Umgehungsrohr (8), durch das das Abgas von dem Abgasrohr (4) zu einer Ansaugseite des Gasmotors (2) zugeführt wird, ohne durch den Katalysator (65) durchzugehen, wobei
der Turbolader (5) angrenzend an den Gasmotor (2) angeordnet ist und einen Abgaseinlass (53) beinhaltet, der in einer Richtung offen ist, die sich von einer Richtung zu dem Abgasrohr (4) unterscheidet,
das Abgasrohr (4) über dem Gasmotor (2) angeordnet ist und einen ersten Abgasauslass (41) beinhaltet, der in einer Richtung offen ist, die sich von einer Richtung zu dem Turbolader (5) unterscheidet, und einen zweiten Abgasauslass (44) beinhaltet, der in der Richtung zu dem Turbolader (5) offen ist, wobei ein stromaufwärtiger Endabschnitt des Umgehungsrohrs (8) mit dem zweiten Abgasauslass (44) verbunden ist, und
der Gasmotor (2) eine Ansaugöffnung beinhaltet, die in der Richtung zu dem Turbolader (5) offen ist.

3. Gasmotorsystem (1) nach Anspruch 2, weiter umfassend:
ein Umgehungsventil, das in einem Durchlass in dem Umgehungsrohr (8) bereitgestellt ist, wobei
die Steuerung (80) einen zweiten Funktionsblock beinhaltet, der dazu ausgebildet ist, wenn die Temperatur des Katalysators (65), die von dem Katalysatortemperaturdetektor (67) gemessen wird, niedriger als die vorgegebene Schwelle ist, das Umgebungsventil zu betreiben, um einen Öffnungsgrad des Umgebungsventils zu erhöhen.

4. Gasmotorsystem (1) nach einem der Ansprüche 1 bis 3, weiter umfassend ein Heizelement, das dazu ausgebildet ist, den Katalysator (65) aufzuheizen.

5. Gasmotorsystem (1) nach einem der Ansprüche 1 bis 4, wobei
das aktivierungsfördernde Mittel ein zweites aktivierungsförderndes Mittel beinhaltet, wobei das zweite aktivierungsfördernde Mittel mindestens eines von Öl, Sauerstoff, sauerstoffreicher Luft, Wasserstoff und dem Brenngas enthält.

## Revendications

1. Système de moteur à essence (1) comprenant :
un moteur à essence (2) ;
un tuyau d'échappement (4) connecté au moteur à essence (2), le tuyau d'échappement (4) étant un tuyau à travers lequel s'écoule le gaz d'échappement évacué du moteur à essence ;
un turbocompresseur (5) connecté au tuyau d'échappement (4) ;
un catalyseur (65) disposé dans un passage s'étendant du tuyau d'échappement (4) au turbocompresseur (5), le catalyseur (65) oxydant le gaz combustible non brûlé dans le gaz d'échappement évacué à partir du moteur à essence (2) ;
un détecteur de température de catalyseur (67) configuré pour mesurer une température du catalyseur (65) ;
un dispositif d'activation de catalyseur (9) configuré pour fournir un agent favorisant l'activation qui favorise l'activation du catalyseur (65) à un passage s'étendant à partir du tuyau d'échappement (4) jusqu'au catalyseur (65) ; et
un dispositif de commande (80) incluant un premier bloc fonctionnel configuré pour faire fonctionner le dispositif d'activation de catalyseur (9) pour fournir l'agent favorisant l'activation lorsque la température du catalyseur (65) mesurée par le détecteur de température de catalyseur (67) est inférieure à un seuil prédéterminé,
**caractérisé par** :
un détecteur de concentration en oxygène (82) configuré pour mesurer une concentration en oxygène dans le gaz d'échappement du moteur à essence (2) au niveau d'une position en amont du catalyseur (65) ; et
un détecteur de quantité d'air d'admission configuré pour mesurer une quantité d'air d'admission du moteur à essence (2),
dans lequel l'agent favorisant l'activation comprend un premier agent favorisant l'activation, le premier agent favorisant l'activation contenant un hydrocarbure qui présente une valeur d'énergie d'activation pour une réaction catalytique catalysée par le catalyseur (65) inférieure à celle du gaz combustible du moteur à essence (2), et
dans lequel le dispositif de commande (80) inclut un troisième bloc fonctionnel configuré pour, lorsque la température du catalyseur (65) mesurée par le détecteur de température de catalyseur (67) est inférieure au seuil prédéterminé, ajuster au moins une de la quantité d'air d'admission du moteur à essence (2), d'une concentration en oxygène dans l'air d'admission et d'une quantité d'injection de carburant du moteur à essence (2) sur la base de la concentration en oxygène mesurée par le détecteur de concentration en oxygène et de la quantité d'air d'admission mesurée par le détecteur de quantité d'air d'admission pour diminuer un rapport d'excès d'air du moteur à essence (2) à partir du rapport d'excès d'air prévu pour un fonctionnement normal.

2. Système de moteur à essence (1) selon la revendication 1, comprenant en outre un tuyau de dérivation (8) à travers lequel le gaz d'échappement du tuyau d'échappement (4) est acheminé vers un côté d'admission du moteur à essence (2) sans passer à travers le catalyseur (65), dans lequel
le turbocompresseur (5) est disposé de manière adjacente au moteur à essence (2), et inclut une entrée de gaz d'échappement (53) qui est ouverte dans une direction différente d'une direction vers le tuyau d'échappement (4),
le tuyau d'échappement (4) est disposé au-dessus du moteur à essence (2), et inclut une première sortie de gaz d'échappement (41) qui est ouverte dans une direction différente d'une direction vers le turbocompresseur (5) et inclut une seconde sortie de gaz d'échappement (44) qui est ouverte dans la direction vers le turbocompresseur (5), dans lequel une partie d'extrémité en amont du tuyau de dérivation (8) est connectée à la seconde sortie de gaz d'échappement (44), et
le moteur à essence (2) inclut une ouverture d'admission qui est ouverte dans la direction vers le turbocompresseur (5).

3. Système de moteur à essence (1) selon la revendication 2, comprenant en outre :
une soupape de dérivation prévue dans un passage dans le tuyau de dérivation (8), dans lequel
le dispositif de commande (80) inclut un deuxième bloc fonctionnel configuré pour, lorsque la température du catalyseur (65) mesurée par le détecteur de température de catalyseur (67) est inférieure au seuil prédéterminé, faire fonctionner la soupape de dérivation pour augmenter un degré d'ouverture de la soupape de dérivation.

4. Système de moteur à essence (1) selon l'une quelconque des revendications 1 à 3, comprenant en outre un élément chauffant configuré pour chauffer le catalyseur (65).

5. Système de moteur à essence (1) selon l'une quelconque des revendications 1 à 4, dans lequel
l'agent favorisant l'activation inclut un second agent favorisant l'activation, le second agent favorisant l'activation contenant au moins l'un parmi une huile, de l'oxygène, de l'air riche en oxygène, de l'hydrogène et le gaz combustible.
